# EUROPEAN PATENT APPLICATION

(11) **EP 0 738 617 A2**
(43) Date of publication of application: **23.10.1996**
(21) Application number: 96302766.9
(22) Date of filing: 19.04.1996
(51) Int. Cl.: B60C 13/00, B60C 13/02

(54) **Pneumatic tyres having an ornamentation comprised of many ridges**

(30) Priority: 19.04.1995 JP 93519/95
(71) Applicant: Bridgestone Corporation, Tokyo (JP)
(72) Inventor: Wakamatsu, Masamichi, Kunitachi City, Tokyo (JP)
(74) Representative: Whalley, Kevin

(57) **Abstract**

A pneumatic tire having one or more marks (3) formed in an annular ornamentation (1) thereof, in which the ornamentation is formed on a surface of a sidewall and comprised of many fine ridges (2) and the mark or marks (3) being inscribed by characters, numerals, signs, figures or the like. In this tire, the ridges (2) extend straight in the same direction at a given inclination angle with respect to a meridional line (M) of the tire and are arranged at intervals in the circumferential direction of the sidewall; the mark (3) is protruded outward from the ridges by at least 0.1 mm in the axial direction of the tire; the ornamentation (1) is constituted by arranging at least one first region (A) with a given arrangement of the ridges and at least one second region (B) with a given arrangement of the ridges in the circumferential direction of the sidewall; and the second region (B) is smaller in length than the first region (A) in the circumferential direction.

## Description

This invention relates to pneumatic tires, and more particularly to a pneumatic tire having an annular ornamentation comprising a plurality of fine ridges formed on a surface of a sidewall at small intervals in a circumferential direction thereof.

In the conventionally known pneumatic tire, the annular ornamentation comprising a plurality of fine ridges arranged at small intervals in a circumferential direction is formed on on a surface of a sidewall in which the interval between the mutual ridges is equal on the circumference.

In general, the surface of the sidewall in the tire is obligated to have letters or markings according to the standard in addition to a mark(s) such as trademark, trade dress or the like inscribed by characters, numerals, signs, figures or the like. For this end, even if many characters, numerals, signs, figures and the like are laid out in a restricted space of the sidewall, it is demanded to have a high visibility for these characters and the like.

It is, therefore, an object of the invention to provide a pneumatic tire having an annular ornamentation comprising a plurality of fine ridges formed on a surface of a sidewall at small intervals in a circumferential direction thereof and having an excellent visibility of a mark(s) such as trademark, trade dress or the like inscribed in the ornamentation by characters, numerals, signs, figures or the like.

According to the invention, there is the provision of in a pneumatic tire having an annular ornamentation formed on a surface of a sidewall and comprised of many fine ridges and a mark(s) inscribed by characters, numerals, signs, figures or the like, the improvement wherein (1) said ridges have a height of 0.2-2.5 mm and are extended straight in the same direction at an inclination angle of 0-80° with respect to a meridional line of the tire and arranged at an interval of 0.4-5 mm in a circumferential direction of the sidewall, (2) said mark is protruded outward from an outer surface of the ridge by at least 0.1 mm in an axial direction of the tire, (3) said ornamentation is constituted by regularly or unregularly arranging a first region(s) in which many ridges extending straight in substantially parallel with each other are arranged at equal intervals in the circumferential direction and a second region(s) in which many ridges are arranged at equal or inequable intervals so as to have a ridge density different from that of the first region in the circumferential direction of the sidewall, and (4) a length of the second region in the circumferential direction is smaller than a length of the first region in the circumferential direction.

The term "inclination angle of the ridge with respect to meridional line of the tire" used herein means an angle of the ridge at its inward end in the radial direction with respect to the meridional line of the tire. In other words, it means an angle between the meridional line of the tire and the ridge at an inward end of the ridge extending straight from inside toward outside in the radial direction of the tire.

All of the ridges in the first region of the ornamentation extend straight in a certain direction with respect to the meridional line of the tire, so that it can not strictly be said that the ridge is extended in parallel with the adjoining ridge. In the invention, therefore, it is considered that the ridge is extended straight in substantially parallel with the adjoining ridge.

In preferable embodiments of the invention, the ridge density of the second region is smaller than that of the first region, and the ridges in the second region are arranged at inequable intervals in the circumferential direction, and the length of the second region in the circumferential direction is within a range of 1-25% of a full circumferential length of the ornamentation, and the number of the second regions is 1-6, preferably 2-4, and a total length of the second regions in the circumferential direction is 1-25% of the full circumferential length of the ornamentation, and the ridge density of an arbitrary second region among the second regions is gradually changed in the circumferential direction, and an outer surface of the ridge is located inward from an outer surface (phantom face) of the sidewall in the axial direction of the tire, and the mark(s) is concentrically formed in the surface of the ornamentation, and an outer surface of the mark is located outward from the outer surface (phantom face) of the sidewall in the axial direction of the tire, and the outer surface of the mark is flat.

The invention will be described with reference to the accompanying drawings, wherein:
Fig. 1 is a diagrammatical side view of a first embodiment of the pneumatic tire according to the invention;
Fig. 2 is a diagrammatically enlarged view of a main part of the tire shown in Fig. 1;
Fig. 3 is a diagrammatical side view of a second embodiment of the pneumatic tire according to the invention;
Fig. 4 is a diagrammatical side view of a third embodiment of the pneumatic tire according to the invention;
Fig. 5 is a diagrammatical side view of a fourth embodiment of the pneumatic tire according to the invention; and
Fig. 6 is a diagrammatical side view of a conventional pneumatic tire.

According to the invention, the first region and the second region constituting the ornamentation differ with each other in the ridge density, so that a light reflected from the ornamentation delicately changes in accordance with the difference of the ridge density between the first and second regions and hence the marks inscribed in the ornamentation by characters, numerals, signs, figures and the like are easily visualized.

When the ridge density of the second region is smaller than that of the first region, the visibility of the mark is further improved. Similarly, when the ridges in the second region are arranged at inequable intervals in the circumferential direction, the visibility of the mark is more improved.

When the length of the second region in the circumferential direction is 1-25% of the full circumferential length of the ornamentation, or when the total length of the second regions in the circumferential direction is 1-25% of the full circumferential length of the ornamentation, the visibility of the mark inscribed by characters, numerals, signs, figures or the like is more improved.

Furthermore, in order to more improve the visibility of the mark inscribed in the ornamentation by characters, numerals, signs, figures or the like, it is favorable that the number of the second regions in the ornamentation is 1-6, preferably 2-4, or the ridge density of arbitrary second region(s) among the second regions is gradually changed in the circumferential direction, or the mark is concentrically formed in the surface of the annular ornamentation, or the outer surface of the ridge in the axial direction is located inward from the outer surface (phantom face) of the sidewall in the axial direction, or the outer surface of the mark in the axial direction is located outward from the outer surface (phantom face) of the sidewall in the axial direction and is flat.

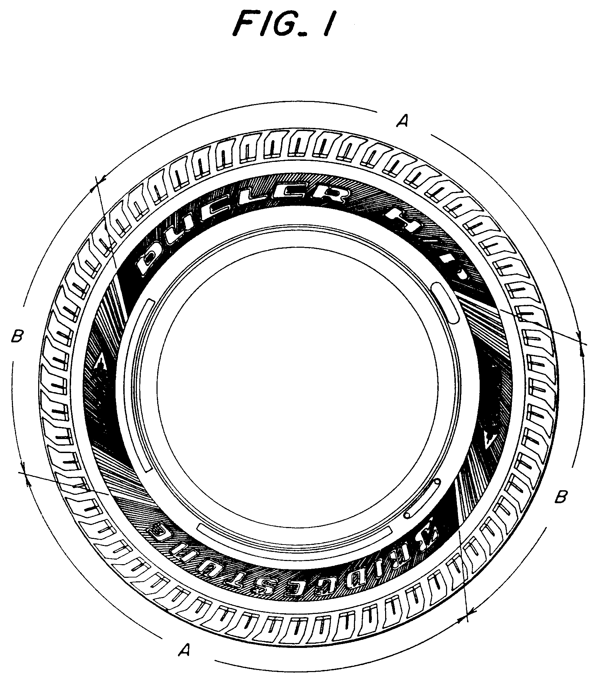

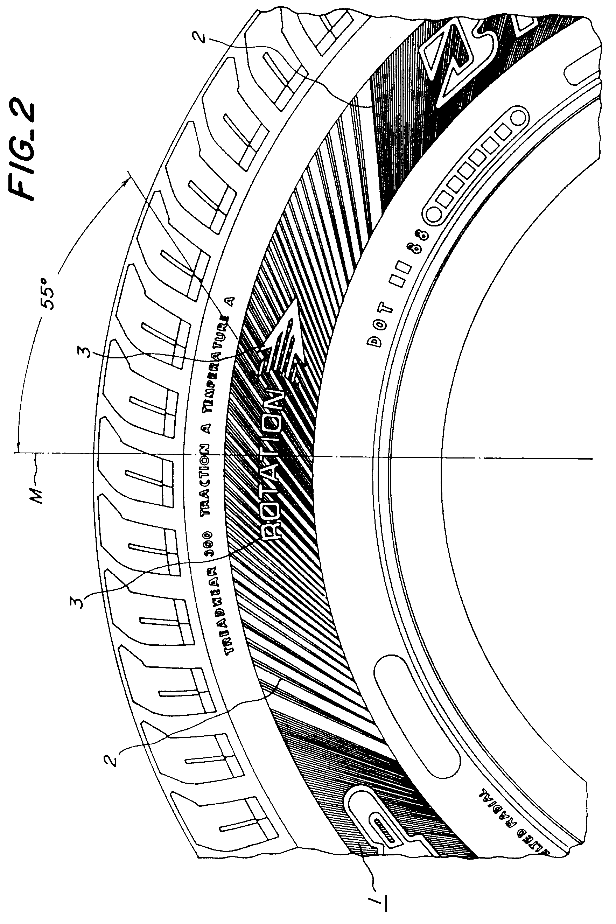

In Fig. 1 is shown a first embodiment of the pneumatic tire according to the invention, while Fig. 2 shows an enlarged view of a main part of this embodiment.

In the tire of the first embodiment, an annular ornamentation 1 is formed on a surface of a sidewall in a circumferential direction thereof and provided with a plurality of fine ridges 2 having a height of 0.3 mm and extending straight at an inclination angle of 55° with respect to a meridional line M of the tire and being arranged at intervals in the circumferential direction as shown in Fig. 2.

Further, the ornamentation 1 is provided with marks 3 having a flat surface and concentrically inscribed by characters, numerals, signs, figures or the like, in which the outer surface of the mark 3 is protruded outward by 1.2 mm from the outer surface of the ridge 2 in the axial direction of the tire. Moreover, the outer surface of the ridge 2 is located inward from the outer surface (phantom face) of the sidewall in the axial direction.

As shown in Fig. 1, the ornamentation 1 is constituted by regularly arranging two first regions A and two second regions B in the order of A-B-A-B in the circumferential direction, wherein many ridges 2 extending straight in substantially parallel with each other are arranged at equal intervals of 1.3 mm in the circumferential direction in each of the first regions A and many ridges 2 are arranged at inequable intervals so as to have a ridge density smaller than that of the first region in each of the second regions B.

In the second region B, the ridges 2 are arranged at inequable intervals so that the ridge density becomes dense in the central zone of the second region and rough in both end zones thereof or the ridge density is changed in the order of rough-dense-rough in the circumferential direction.

The length of each of the second regions B in the circumferential direction is 6.7% of the full circumferential length of the ornamentation 1, while the length of each of the first region A in the circumferential direction is 43.3% of the full circumferential length. That is, the circumferential length of the second region B is shorter than that of the first region A, and the total length of the second regions B in the circumferential direction is 13.4% of the full circumferential length.

The ridge density of the second region B is 3.0 ridges/10 mm, which is smaller than that of the first region A (7.7 ridges/10 mm).

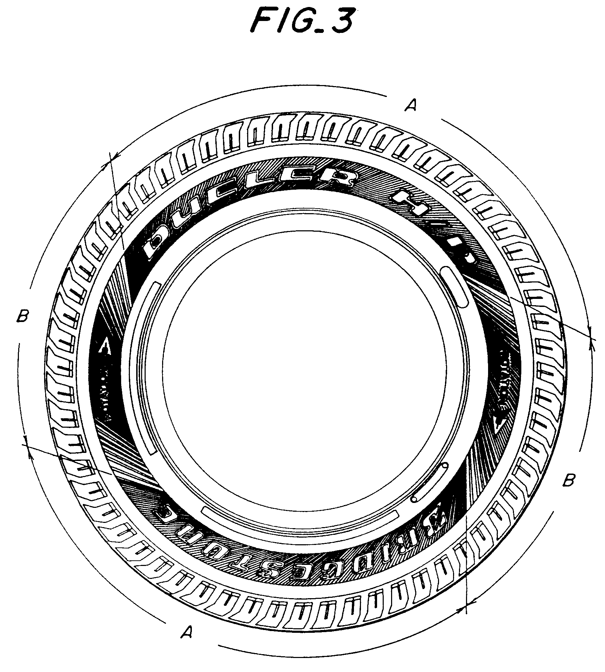

In Fig. 3 is shown a second embodiment of the pneumatic tire according to the invention, which has the same construction as in the first embodiment except that the ridges 2 are extended straight at an inclination angle of 60° with respect to the meridional line M of the tire, and the ridges 3 in the first region A are arranged at equal intervals of 1.49 mm, and the length of each of the second region B in the circumferential direction is 7.8% of the full circumferential length of the ornamentation 1 or the total length of the second regions B in the circumferential direction is 15.6% of the full circumferential length.

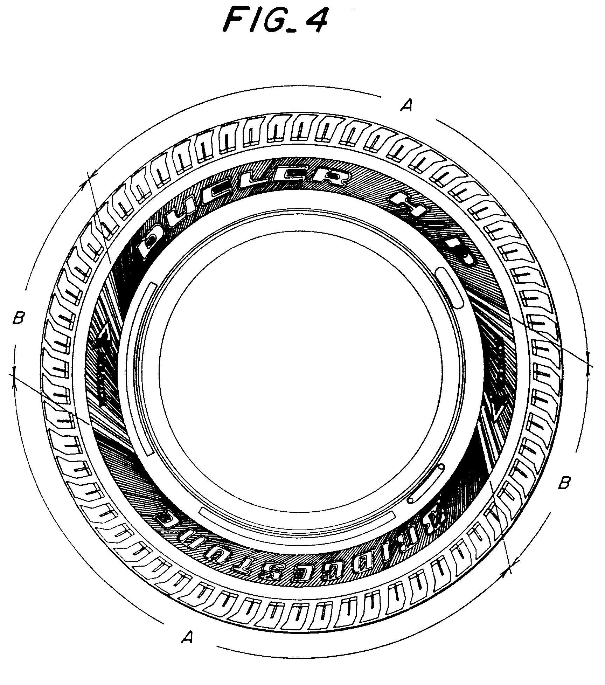

In Fig. 4 is shown a third embodiment of the pneumatic tire according to the invention, which has the same construction as in the second embodiment except that the length of each of the second regions B in the circumferential direction is 3.5% of the full circumferential length of the ornamentation 1 or the total length of the second regions B is 7% of the full circumferential length, and the ridges 3 in the second region B are arranged at inequable intervals so that the ridge density is changed in the order of dense-rough-dense in the circumferential direction.

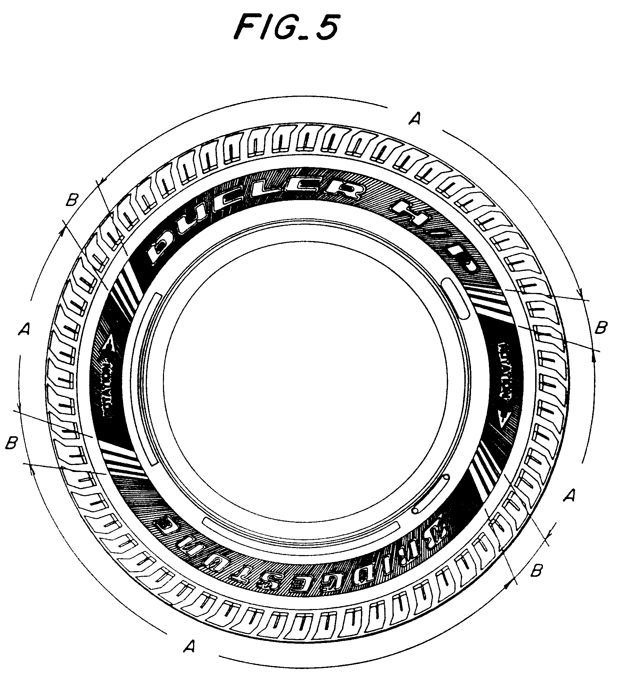

In Fig. 5 is shown a fourth embodiment of the pneumatic tire according to the invention, which has the same construction as in the second embodiment except that the ridges 2 are extended straight at an inclination angle of 40° with respect to the meridional line M of the tire, and the ridges 2 in the first region A are arranged at equal intervals of 1.04 mm, and the length of each of two first regions in the circumferential direction among four first regions A is 33% of the full circumferential length of the ornamentation 1, and the length of each of the remaining two first regions in the circumferential direction is 11% of the full circumferential length, and the length of each of the four second regions B in the circumferential direction is 1.7% of the full circumferential length or the total length of the second regions B in the circumferential direction is 6.8% of the full circumferential length, and the ridges 2 in the second region B are arranged at inequable intervals so that the ridge density is changed in the order of dense-rough in the circumferential direction.

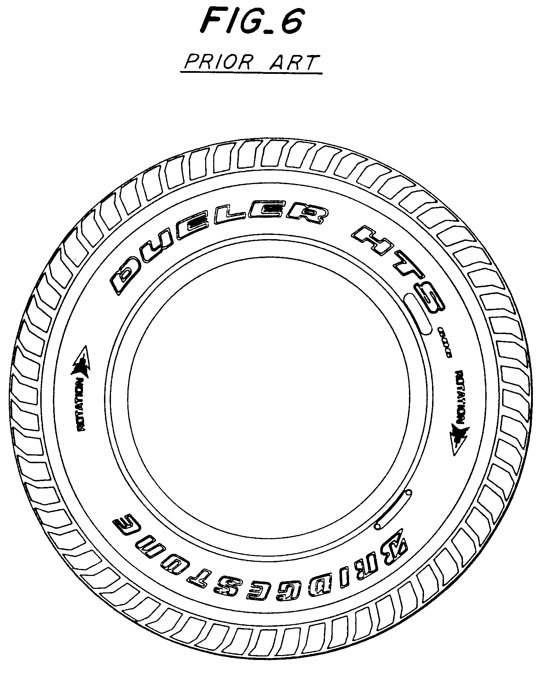

In Fig. 6 is shown the conventional tire as a control, which has the same construction as in the first embodiment except that the ridges are not formed in the ornamentation 1.

The visibility of the marks 3 such as trademark and the like inscribed in the ornamentation by English characters, other characters and figures is visually evaluated with respect to these tires. The evaluation results are shown in Table 1 by an index on the basis that the control is 100. The larger the index value, the better the visibility.

**Table 1**

| | Control | First embodiment | Second embodiment | Third embodiment | Fourth embodiment |
|---|---|---|---|---|---|
| Visibility | 100 | 110 | 110 | 110 | 115 |

As seen from the results of Table 1, the visibility of marks such as trademark and the like inscribed in the ornamentation by characters, numerals, signs, figures or the like is considerably excellent in the pneumatic tires according to the invention having the ornamentation provided with a plurality of fine ridges arranged at small intervals in the circumferential direction of the tire.

## Claims

1. A pneumatic tire having an annular ornamentation (1) formed on a surface of a sidewall and comprised of many line ridges (2) and one or more mark(s) (3) inscribed by characters, numerals, signs, figures or the like, characterized in that (a) said ridges (2) have a height of 0.2-2.5 mm and extend straight in the same direction at an inclination angle of 0-80° with respect to a meridional line (M) of the tire and are arranged at an interval of 0.4-5 mm in the circumferential direction of the sidewall, (b) said mark (3) is protruded outward from the outer surface of the ridges by at least 0.1 mm in the axial direction of the tire, (c) said ornamentation (1) is constituted by regularly or non-regularly arranging one or more first regions (A) in which many ridges extending straight and substantially parallel with each other are arranged at equal intervals in the circumferential direction and one or more second regions (B) in which many ridges are arranged at equal or non-equal intervals so as to have a ridge density different from that of the first region (A) in the circumferential direction of the sidewall, and (d) the length of the second region (B) in the circumferential direction is smaller than the length of the first region (A) in the circumferential direction.

2. A pneumatic tire as claimed in claim 1, characterized in that the ridge density of the second region (B) is smaller than that of the first region (A).

3. A pneumatic tire as claimed in claim 1 or 2, characterized in that the ridges (2) in the second region (B) are arranged at non-equal intervals in the circumferential direction

4. A pneumatic tire as claimed in any of claims 1 to 3, characterized in that the length of the second region (B) in the circumferential direction is within a range of 1-25% of the full circumferential length of the ornamentation (1).

5. A pneumatic tire as claimed in any of claims 1 to 4, characterized in that the number of the second regions (B) is 1-6.

6. A pneumatic tire as claimed in claim 5, characterized in that the number of the second regions (B) is 2-4.

7. A pneumatic tire as claimed in any of claims 1 to 6, characterized in that the total length of the second regions (B) in the circumferential direction is 1-25% of the full circumferential length of the ornamentation (1).

8. A pneumatic tire as claimed in any of claims 1 to 7, characterized in that the ridge density of an arbitrary second region (B) among the second regions is gradually changed in the circumferential direction.

9. A pneumatic tire as claimed in any of claims 1 to 8, characterized in that the outer surface of the ridges is located inward from an outer surface (phantom face) of the sidewall in the axial direction of the tire.

10. A pneumatic tire as claimed in any of claims 1 to 9, characterized in that the mark(s) is concentrically formed in the surface of the ornamentation (1).

11. A pneumatic tire as claimed in any of claims 1 to 10, characterized in that the outer surface of the mark (3) is located outward from the outer surface (phantom face) of the sidewall in the axial direction of the tire.

12. A pneumatic tire as claimed in claim 11, characterized in that the outer surface of the mark (3) is flat.
